# EUROPÄISCHE PATENTSCHRIFT

(11) **EP 3 649 191 B1**
(45) Veröffentlichungstag und Bekanntmachung des Hinweises auf die Patenterteilung: **02.03.2022**
(21) Anmeldenummer: 18724527.9
(22) Anmeldetag: 14.05.2018
(51) Int. Cl.: C08L 7/00, C08L 21/00

(54) **SCHWEFELVERNETZBARE KAUTSCHUKMISCHUNG**
SULFUR-CROSSLINKABLE RUBBER MIXTURE
MÉLANGE DE CAOUTCHOUCS RÉTICULABLE AU SOUFRE

(30) Priorität: 03.07.2017 DE 102017211247
(43) Veröffentlichungstag der Anmeldung: 13.05.2020
(73) Patentinhaber: Continental Reifen Deutschland GmbH, 30165 Hannover (DE)
(72) Erfinder: RAJAN, Vipin, 30173 Hannover (DE); EICHHORST, Christoph, 30161 Hannover (DE); SCHMAUNZ-HIRSCH, Cornelia, 31515 Wunstorf (DE); KRAMER, Thomas, 32049 Herford (DE); RECKER, Carla, 30167 Hannover (DE)
(74) Vertreter: Continental Corporation
(86) Internationale Anmeldenummer: PCT/EP2018/062284
(87) Internationale Veröffentlichungsnummer: WO 2019/007570

(56) Entgegenhaltungen:
- EP-A1- 2 578 610
- EP-A2- 1 581 589
- US-A1- 2004 059 039
- US-A1- 2004 162 391
- US-A1- 2004 241 331
- US-B1- 6 605 670

## Beschreibung

Die Erfindung betrifft eine schwefelvernetzbare Kautschukmischung, die ein Methylenakzeptor-Methylendonor-Paar aufweist. Ferner betrifft die Erfindung einen Fahrzeugluftreifen, der zumindest eine solche mit Schwefel vernetzte Kautschukmischung aufweist.

In schwefelvernetzbaren Kautschukmischungen, die als Gummierungsmischungen für textile Festigkeitsträger wie Rayon, Polyamid und Polyester verwendet werden, werden üblicherweise so genannte Methylenakzeptor-Methylendonor-Paare eingesetzt, um zusätzlich zur Anbindung über das Schwefelnetzwerk eine Verbindung zur Haftimprägnierung des textilen Festigkeitsträgers, in der Regel ein RFL-Dip, zu erzielen. Der RFL-Dip beinhaltet Resorcin und Formaldehyd oder deren Vorkondensate.

Methylenakzeptorreaktanten sind beispielsweise Resorcin oder Resorcinderivate oder andere Phenole, die mit den Methylendonorreaktanten (Formaldehydspendern, wie z. B. Hexamethoxymethylmelamin (HMMM) und/oder Hexamethylentetramin (HMT)) unter Harzbildung kondensieren.

Als Alternative zu den RFL-Dips werden heute auch malein-funktionalisierte Polymere zur Behandlung von textilem Gewebe bzw. textilen Festigkeitsträgern angeboten, um eine verbesserte Haftung an Kautschukmischungen zu erzielen. Solche so genannten RF-freien Dips werden z. B. in der EP 1745079 B1 sowie der DE 102014211365 A1 offenbart.

Der Einsatz von Methylenakzeptor-Methylendonor-Paaren ist auch für Gummierungsmischungen für metallische Festigkeitsträger, insbesondere vermessingten Stahlcord, bekannt. Bei dem sogenannten Direkthaftverfahren für vermessingten Stahlcord enthält die Gummierungsmischung beispielsweise Cobaltsalze und ein Resorcin-Formaldehyd-Kieselsäuresystem, wobei das Formaldehyd in der Regel Formaldehydspendern wie Hexamethoxymethylmelamin (HMMM) und/oder Hexamethylentetramin (HMT) entstammt. Zur Verbesserung der Haftung verwendet man auch Verstärkerharze und die Mischungen sollten viel Schwefel und weniger Beschleuniger enthalten, damit eine ausreichende mechanische Verzahnung mit der Stahlcordoberfläche erfolgen kann.

Als Methylendonor/Formaldehydspender werden z. B. Hexamethoxymethylmelamin (HMMM) und/oder Hexamethylentetramin (HMT) eingesetzt. Ihr Einsatz ist in der Reifenindustrie weit verbreitet. Als Methylenakzeptorreaktanten kommen Resorcin und Resorcinäquivalente oder deren Vorkondensate sowie andere Phenole zum Einsatz. Während des Vulkanisationsprozesses wird aus dem Methylendonor und dem Methylenakzeptor ein Harz gebildet. Es bildet sich neben dem Schwefelnetzwerk ein zweites Netzwerk basierend auf Methylendonor und Methylenakzeptor aus, welches mit dem RFL-Dip in haftende Wechselwirkung tritt.

Resorcin hat einen relativ hohen Dampfdruck bei den Verarbeitungstemperaturen einer Gummierungsmischung, so dass es z. T. bei der Verarbeitung verdampft und sich an kühleren Bauteilen niederschlägt. Dies führt zu großen Verunreinigungen und somit hohem Reinigungsaufwand. Ferner ist Resorcin als gesundheitsschädlich und umweltgefährlich eingestuft. Es wirkt möglicherweise auf das zentrale Nervensystem. Man ist daher bestrebt, auf Resorcin als Methylenakzeptorreaktant zu verzichten.

Mischungen, die auf Methylenakzeptorreaktanten verzichten, sind z. B. aus der EP 0 830 423 B1 und der EP 2 065 219 A1 bekannt. In diesen Schriften werden aber so genannte selbstkondensierende alkylierte Triazinharze mit hoher Imino- und/oder Methylolfunktionalität eingesetzt, wobei angenommen wird, dass die hohe Imino- und/oder Methylolfunktionalität es diesen Harzen erlaubt, selbst zu kondensieren und dabei ein für die Haftung nötiges Netzwerk zu bilden, ohne dass es eines Methylenakzeptorreaktanten bedarf. Der Verzicht auf ein Methylenakzeptor-Methylendonor-Paar wird in diesen Schriften nicht erwähnt.

Aus der EP 2 674 452 A1 ist es bekannt, als Methylenakzeptor in einer schwefelvernetzbaren Gummierungsmischung für textile Festigkeitsträger in Fahrzeugluftreifen ein reaktives Phenolharz, insbesondere ein mit einem pflanzlichen und/oder tierischen Öl, einem ungesättigten Öl und/oder aromatischen Kohlenwasserstoff modifiziertes Phenolharz, einzusetzen. Dies führt bei guter Haftung zu weniger Verunreinigungen bei der Mischungsherstellung und gleichzeitig könnte auf gesundheitsschädliches und umweltgefährdendes Resorcin bei der Verarbeitung verzichtet werden.

Es hat sich gezeigt, dass die vorgenannten Methylenakzeptorreaktanten nicht für alle Anwendungsfälle, insbesondere alle Reifenbodymischungen, zu der gewünschten Haftung und Steifigkeit führen. Häufig sind auch noch Resorcinreste in den Harzen vorhanden, die die bekannten Gesundheits- und Umweltgefahren bei der Verarbeitung nach sich ziehen.

Ferner ist es aus der US 2004/059039 A1, der US 2004/162391 A1, der EP 2 578 610 A1, der US 2004/241331 A1, der EP 1 581 589 A1 und der US 6 605 670 B1 bekannt, dass in Kautschukmischungen als Methylenakzeptor ein reaktives Novolak-Harz mit einem reduzierten Gehalt an freiem Resorcin eingesetzt wird. Der Gehalt des Harzes an freiem Resorcin liegt in diesen Schriften bei mehr als 0,1 Gew.-%.

Der Erfindung liegt die Aufgabe zu Grunde, eine schwefelvernetzbare Kautschukmischung bereitzustellen, die bei zumindest gleichbleibender Haftung zu Festigkeitsträgern zu einer Verbesserung im Hinblick auf die Arbeitssicherheit und den Umweltschutz führt.

Gelöst wird die Aufgabe erfindungsgemäß dadurch, dass der Methylenakzeptor ein für eine Reaktion mit einem Methylendonor reaktives Novolak-Harz mit einem Gehalt an freiem Resorcin von weniger als 0,1 Gew.-% oder ein Vorkondensat, enthaltend ein Novolak-Harz, mit einem Gehalt an freiem Resorcin von weniger als 0,1 Gew.-% ist.

Novolak-Harze sind säurekatalytisch hergestellte Polykondensationsprodukte aus Phenolen oder Phenolderivaten, wie z. B. Resorcin, mit Formaldehyd oder anderen Aldehyden und Ketonen. Novolake enthalten im Wesentlichen keine Methylol-Gruppen, sind also annähernd frei von Methylol-Gruppen, und gehören zur Gruppe der niedermolekularen (Gewichtsmittel-Molmassen M_{w} im Bereich von ca. 500 bis 5000 g/mol bestimmt mittels GPC), noch schmelzbaren und löslichen Phenolharze.

Unter "für eine Reaktion mit einem Methylendonor reaktive Novolak-Harze" sind solche zu verstehen, die in der ortho- und para-Stellung reaktiv sind für eine derartige Reaktion.

Es hat sich gezeigt, dass mit diesen Novolak-Harzen bzw. Vorkondensaten, enthaltend Novolak-Harze, eine gute oder sogar verbesserte Haftung zu Festigkeitsträgern nach Vulkanisation erzielt werden kann. Durch den Einsatz der speziellen Novolak-Harze als Methylenakzeptoren werden auch andere Vulkanisateigenschaften kaum negativ beeinflusst. Gleichzeitig bewirkt der geringe Anteil an freiem Resorcin, dass die Mischungen umweltfreundlicher und weniger gesundheitsgefährdend bei der Verarbeitung sind.

Um die Umweltbelastung und die gesundheitliche Belastung zu verringern ist es von Vorteil, wenn der Methylenakzeptor ein für eine Reaktion mit einem Methylendonor reaktives Novolak-Harz mit einem Gehalt an freiem Resorcin von weniger als 0,1 Gew.-%, oder ein Vorkondensat, enthaltend ein Novolak-Harz, mit einem Gehalt an freiem Resorcin von weniger als 0,1 Gew.-%, ist.

Als Methylenakzeptoren mit einem Gehalt an freiem Resorcin von weniger als 0,1 Gew.-% können unterschiedlichste Novolak-Harze oder Vorkondensate, enthaltend ein Novolak-Harz, eingesetzt werden.

Als vorteilhaft hat sich z. B. erwiesen, wenn der Methylenakzeptor ein Resorcin-Formaldehyd-Styrol-Novolak-Harz ist. Mit diesen Harzen kann eine besonders gute Haftung zu Stahlcorden erzielt werden.

Alternativ dazu kann der Methylenakzeptor ein Vorkondensat aus Resorcin und einem Aceton-Novolak-Harz mit einem Gehalt an freiem Resorcin von weniger als 0,1 Gew.-% sein. Mit diesen Substanzen kann eine besonders gute Haftung zu Textilcorden, z. B. Polyestercorden, erzielt werden.

Als weitere Alternative kann es sich bei dem Methylenakzeptor um ein Phenol-Formaldehyd-Novolak-Harz mit einem Gehalt an freiem Resorcin von weniger als 0,1 Gew.-% handeln. Mit diesen Substanzen wird sowohl eine gute Haftung zu metallischen als auch textilen Festigkeitsträgern erzielt.

Die unterschiedlichen Methylenakzeptoren können auch als Gemische verwendet werden.

Gemäß einer vorteilhaften Weiterbildung der Erfindung beträgt das Gewichtsverhältnis von Methylenakzeptor zu Methylendonor 2,2:1 bis 1:2,2, bevorzugt 1,4:1 bis 1:1,4. Mit diesen Gewichtsverhältnissen wird ein Haftungsniveau erreicht, welches dem von herkömmlichen Systemen aus Resorcin und Methylendonor gleicht. Ferner zeigen derartige Mischungen ein gutes Vulkanisationsverhalten bei gleichzeitig guten Vulkanisateigenschaften.

Als Methylendonor wird in der Kautschukmischung vorzugsweise Hexamethoxymethylmelamin (HMMM) und/oder Hexamethylentetramin (HMT, 1,3,5,7-Tetraazaadamantan, Urotropin) eingesetzt. Dies sind übliche auf dem Markt erhältliche Methylendonoren, die im Zusammenspiel mit den Novolak-Harzen bzw. Vorkondensaten eine besonders gute Haftung zwischen Festigkeitsträger und Gummierungsmischung gewährleisten. HMMM wird beispielsweise als technisches Produkt - oft auf einem inerten Träger - mit einem Methylierungsgrad < 6 eingesetzt.

Die schwefelvernetzbare Kautschukmischung enthält weitere in der Kautschukindustrie übliche Bestandteile, insbesondere zumindest einen Kautschuk. Als Kautschuke können Dienkautschuke eingesetzt werden. Zu den Dienkautschuken zählen alle Kautschuke mit einer ungesättigten Kohlenstoffkette, die sich zumindest teilweise von konjugierten Dienen ableiten.

Die Kautschukmischung kann als Dienkautschuk Polyisopren (IR, NR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.

Enthält die Kautschukmischung als Dienkautschuk Polybutadien (BR), kann es sich um cis-1,4-Polybutadien handeln. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Vinyl-Polybutadiene und Styrol-Butadien-Copolymere einsetzbar. Bei den Vinyl-Polybutadienen und Styrol-Butadien-Copolymeren kann es sich um lösungspolymerisierte (Styrol)-Butadien-Copolymere (S-(S)BR) mit einem Styrolgehalt, bezogen auf das Polymer, von ca. 0 bis 45 Gew.-% und einem Vinylgehalt (Gehalt an 1,2-gebundenem Butadien, bezogen auf das gesamte Polymer) von 10 bis 90 Gew.-% handeln, welche zum Beispiel unter Verwendung von Lithiumalkylen in organischem Lösungsmittel hergestellt werden können. Die S-(S)BR können auch gekoppelt und endgruppenmodifiziert sein. Es können aber auch emulsionspolymerisierte Styrol-Butadien-Copolymere (E-SBR) sowie Mischungen aus E-SBR und S-(S)BR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silansulfidgruppen handeln. Die Dienkautschuke können zusätzlich oder alternativ auch gekoppelt sein.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Der Kautschukmischung kann als Verarbeitungshilfsmittel und zur Mischungsverbilligung auch Regenerat (Reclaim) zugesetzt werden.

Die Kautschukmischung kann unterschiedliche Füllstoffe, wie Ruße, Kieselsäuren, Alumosilicate, Kreide, Stärke, Magnesiumoxid, Titandioxid oder Kautschukgele in üblichen Mengen enthalten, wobei die Füllstoffe in Kombination eingesetzt werden können.

Wird Ruß in der Kautschukmischung eingesetzt, handelt es sich bevorzugt um solche Typen, die eine CTAB-Oberfläche (gemäß ASTM D 3765) von mehr als 30 m²/g aufweisen. Diese lassen sich einfach einmischen und gewährleisten einen geringen Wärmeaufbau.

Sind Kieselsäuren in der Mischung enthalten, kann es sich um die für Reifenkautschukmischungen üblichen Kieselsäuren handeln. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Enthält die Kautschukmischung Kieselsäure oder andere polare Füllstoffe, können der Mischung zur Verbesserung der Verarbeitbarkeit und zur Anbindung des polaren Füllstoffes an den Kautschuk Silan-Kupplungsagenzien zugesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Des Weiteren kann die erfindungsgemäße Kautschukmischung übliche Zusatzstoffe in üblichen Gewichtsteilen enthalten. Zu diesen Zusatzstoffen zählen Weichmacher, wie z. B. Glyceride, Faktisse, Kohlenwasserstoffharze, aromatische, naphthenische oder paraffinische Mineralölweichmacher (z. B. MES (mild extraction solvate) oder TDAE (treated distillate aromatic extract)), Öle auf Basis nachwachsender Rohstoffe (wie z. B. Rapsöl, Terpenöle (z. B. Orangenöle) oder Faktisse), so genannte BTL-Öle (wie sie in der DE 10 2008 037714 A1 offenbart sind) oder flüssige Polymere (wie z. B. flüssiges Polybutadien)); Alterungsschutzmittel, wie z. B. N-Phenyl-N'-(1,3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren (z. B. Stearinsäure), Wachse, Klebharze, wie z. B. Kohlenwasserstoffharze und Kolophonium, und Mastikationshilfsmittel, wie z. B. 2,2'-Dibenzamidodiphenyldisulfid (DBD).

Die Vulkanisation wird in Anwesenheit von Schwefel und/oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,4 bis 8 phr) der Kautschukmischung zugesetzt. Die Vulkanisation kann auch in Anwesenheit von sehr geringen Schwefelmengen in Kombination mit schwefelspendenden Substanzen erfolgen.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS) und Benzothiazyl-2-dicyclohexylsulfenamid (DCBS), Guanidinbeschleuniger wie z. B. N,N'-Diphenylguanidin (DPG), Dithiocarbamatbeschleuniger wie z. B. Zinkdibenzyldithiocarbamat, Disulfide, Thiophosphate. Die Beschleuniger können auch in Kombination miteinander eingesetzt werden, wobei sich synergistische Effekte ergeben können.

Auch weitere netzwerkbildende Systeme, wie z. B. Vulkuren^{®}, Duralink^{®}, Perkalink^{®} oder Systeme, wie sie in der WO 2010/049261 A2 beschrieben sind, können in der Gummierungsmischung eingesetzt werden.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Kautschukmischung kann in unterschiedlichsten Gummiprodukten, in denen Festigkeitsträger vorhanden sind, eingesetzt werden. Bei diesen Gummiprodukten kann es sich z. B. um Antriebsriemen, Fördergurte, Schläuche, gummierte Gewebe oder Luftfedern handeln.

Vorzugsweise wird die Kautschukmischung in Fahrzeugluftreifen eingesetzt. Sie kann dort z. B. als Gummierung für textile oder metallische Festigkeitsträger eingesetzt werden. Die textilen Festigkeitsträger können z. B. aus Aramid, Polyester, Polyamid, Rayon oder Hybridcorden aus diesen Materialien bestehen.

Um eine gute Haftung zu den Festigkeitsträgern zu erzielen, hat es sich als vorteilhaft erwiesen, wenn die Menge an Methylenakzeptor in der Kautschukmischung 1 bis 4 phr beträgt.

Die Kautschukmischung kann zur Gummierung unterschiedlichster Reifenbauteile, wie dem Wulstkern, den Wulstabdeckungen, den Wulstverstärkern, dem Gürtel, der Karkasse oder den Gürtelbandagen, eingesetzt werden, aber auch für andere festigkeitsträgernahe Mischungen wie Kernreiter, Squeegee, Gürtelkantenpolster, Schulterpolster, Laufstreifenunterplatten oder andere Bodymischungen kann die Kautschukmischung verwendet werden, wobei auch mehrere Bauteile innerhalb eines Reifens mit der erfindungsgemäßen Mischung versehen werden können. Die Herstellung der erfindungsgemäßen Fahrzeugluftreifen erfolgt dabei nach dem Fachmann bekannten Verfahren.

Vorzugsweise wird die Kautschukmischung als Karkass- und/oder Bandagengummierung eingesetzt, wo die guten Haftwerte zwischen Festigkeitsträger und Gummierungsmischung zu einer hohen Lebensdauer des Fahrzeugluftreifens führen.

Alternativ oder zusätzlich kann die Kautschukmischung auch als Gürtelgummierungsmischung eingesetzt werden, was wiederum die Lebensdauer des Fahrzeugluftreifens positiv beeinflusst.

Die Erfindung soll nun anhand der nachstehenden Tabellen näher erläutert werden.

In den Tabellen 1 und 2 sind Beispielmischungen für unterschiedliche Bauteile eines Fahrzeugluftreifens angegeben. In Tabelle 1 sind Mischungen für eine Gummierung textiler Festigkeitsträger dargestellt. Tabelle 2 zeigt Mischungen für eine Gummierung von Stahlcord mit einem hohen Rußanteil, während in Tabelle 3 Mischungen für eine Gummierung von Stahlcord mit einem hohen Kieselsäureanteil zeigt. Die erfindungsgemäßen Mischungen sind mit E, die Vergleichsmischungen mit V gekennzeichnet.

Bei den Mischungen der Tabellen wurde die Art und Menge an Methylenakzeptor (reaktives Novolak-Harz bzw. Vorkondensat) und z. T. die Menge an Methylendonor (HMMM) variiert.

Die Mischungsherstellung erfolgte unter üblichen Bedingungen unter Herstellung einer Grundmischung und anschließend der Fertigmischung in einem Labortangentialmischer. Es wurde der relative Vernetzungsgrad von 90 % (t₉₀) mit Hilfe eines rotorlosen Vulkameters (MDR = Moving Disc Rheometer) gemäß DIN 53 529 bestimmt.

Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei 70 °C gemäß DIN 53 512
- Zugfestigkeit bei Raumtemperatur gemäß DIN 53 504
- Reißdehnung bei Raumtemperatur gemäß DIN 53 504
- Spannungswerte (Modul) bei 200 % bzw. 300 % Dehnung bei Raumtemperatur gemäß DIN 53 504

Ferner wurden mit den Mischungen aus Tabelle 1 Haftversuche, so genannte Peel-Tests, gemäß ISO 36:2011 (E) mit Auswertung gemäß DIN ISO 6133 an textilen Festigkeitsträgern aus Polyester ohne Alterung vorgenommen. Dazu wurden mit RFL-Dip ausgerüstete Festigkeitsträgercorde aus Polyester (1440x2 dtex, 105 epdm) mit den unvulkanisierten Kautschukmischungen kalandriert und anschließend vulkanisiert. Anschließend wurde die Kraft zum Abschälen der Mischung von den Corden bestimmt und die Bedeckung der Corde mit Mischung nach dem Abziehen optisch ermittelt. 5 bedeutet vollständige Bedeckung, 0 bedeutet, dass keine Gummireste mehr auf dem Cord verblieben sind.

Mit den Mischungen der Tabelle 2 wurden Versuche zur Haftung an vermessingtem Stahlcord (2 x 0,30 HT) gemäß ASTM 2229/D1871 ohne Alterung vorgenommen (Einbettlänge in die Gummierungsmischung: 10 mm, Auszugsgeschwindigkeit: 125 mm/min). Es wurde die Herausziehkraft bestimmt.

Mit den Mischungen der Tabelle 3 wurden Versuche zur Haftung an vermessingtem Stahlcord (1+5 x 0,40 HT) gemäß ASTM 2229/D1871 ohne Alterung vorgenommen (Einbettlänge in die Gummierungsmischung: 12,5 mm, Auszugsgeschwindigkeit: 125 mm/min). Es wurde die Herausziehkraft bestimmt.

**Tabelle 1**

| Bestandteile | Einheit | 1(V) | 2(V) | 3(E) | 4(E) | 5(E) |
|---|---|---|---|---|---|---|
| Polyisopren | phr | 80 | 80 | 80 | 80 | 80 |
| Polybutadien | phr | 20 | 20 | 20 | 20 | 20 |
| Füllstoffe | phr | 62,5 | 62,5 | 62,5 | 62,5 | 62,5 |
| Weichmacher | phr | 6 | 6 | 6 | 6 | 6 |
| Alterungsschutzmittel | phr | 2 | 2 | 2 | 2 | 2 |
| Vulkanisationsaktivatoren | phr | 7,5 | 7,5 | 7,5 | 7,5 | 7,5 |
| Resorcin (techn.) | phr | 1,25 | | | | |
| Resorcinharz^{a)} | phr | | 1,63 | | | |
| Methyenakzeptor A | phr | | | 1,63 | | |
| Methyenakzeptor B | phr | | | | 1,63 | |
| Methyenakzeptor C | phr | | | | | 1,63 |
| Hexamethoxymethylmelamin | phr | 1,25 | 1,25 | 1,25 | 1,25 | 1,25 |
| Beschleuniger | phr | 1,6 | 1,6 | 1,6 | 1,6 | 1,6 |
| Schwefel | phr | 3,4 | 3,4 | 3,4 | 3,4 | 3,4 |

| Eigenschaften | | | | | | |
|---|---|---|---|---|---|---|
| t₉₀ | min | 8,6 | 8,3 | 9,2 | 9,5 | 10,4 |
| Härte bei RT | ShoreA | 72 | 68 | 71 | 70 | 70 |
| Rückprallelast. bei 70 °C | % | 59 | 61 | 57 | 56 | 57 |
| Zugfestigkeit bei RT | MPa | 19 | 19 | 19 | 20 | 20 |
| Reißdehnung bei RT | % | 418 | 441 | 450 | 471 | 487 |
| Modul 200 % | MPa | 8,0 | 7,4 | 7,3 | 7,0 | 6,9 |
| Haftung (ungealtert) | N/25 mm | 176 | 204 | 189 | 192 | 252 |
| Bedeckung (ungealtert) | - | 4,5 | 4,5 | 4,9 | 4,4 | 4,5 |

| | | | | | | |
|---|---|---|---|---|---|---|
| a) Resorcinharz mit einem Anteil an freiem Resorcin von 8 bis 18 % | | | | | | |

Methylenakzeptor A: Resorcin-Formaldehyd-Styrol-Novolak-Harz mit einem Gehalt an freiem Resorcin von weniger als 0,1 Gew.-%, Erweichungstemperatur 100 - 110 °C
Methylenakzeptor B: Phenol-Formaldehyd-Styrol-Novolak-Harz mit einem Gehalt an freiem Resorcin von weniger als 0,1 Gew.-%, Erweichungstemperatur 105 - 120 °C
Methylenakzeptor C: Vorkondensat aus Resorcin und einem Aceton-Novolak-Harz mit einem Gehalt an freiem Resorcin von weniger als 0,1 Gew.-%, Erweichungstemperatur 80 - 100 °C

Aus der Tabelle 1 wird ersichtlich, dass auch mit den reaktiven Novolak-Harzen mit einem Gehalt an freiem Resorcin von weniger als 0,1 Gew.-% oder dem Vorkondensat, enthaltend ein Novolak-Harz, mit einem Gehalt an freiem Resorcin von weniger als 0,1 Gew.-% als Methylenakzeptor eine gute Haftung erzielt werden kann und die Bedeckung der Festigkeitsträger mit Mischung sehr gut ist. Auch die anderen physikalischen Eigenschaften verbleiben auf gutem Niveau oder werden sogar verbessert. Die geringen Mengen an Resorcin von weniger als 0,1 Gew.-% in den erfindungsgemäßen Mischungen tragen außerdem dazu bei, dass sich eine Verbesserung hinsichtlich der Arbeitssicherheit und des Umweltschutzes ergeben. Der Verzicht auf Resorcin bewirkt ferner, dass es zu weniger Verunreinigungen bei der Mischungsherstellung durch Ablagerungen kommt.

**Tabelle 2**

| **Bestandteile** | **Einheit** | **6(V)** | **7(V)** | **8(E)** | **9(E)** | **10(E)** |
|---|---|---|---|---|---|---|
| Polyisopren | phr | 100 | 100 | 100 | 100 | 100 |
| Ruß | phr | 62 | 62 | 62 | 62 | 62 |
| Weichmacher | phr | 4 | 4 | 4 | 4 | 4 |
| Alterungsschutzmittel | phr | 5 | 5 | 5 | 5 | 5 |
| organisches Cobaltsalz | phr | 1,3 | 1,3 | 1,3 | 1,3 | 1,3 |
| Zinkoxid | phr | 7 | 7 | 7 | 7 | 7 |
| Resorcin (techn.) | phr | 1,85 | | | | |
| Resorcinharz^{a)} | phr | | 2,4 | | | |
| Methyenakzeptor A | phr | | | 3 | | |
| Methyenakzeptor B | phr | | | | 2,5 | |
| Methyenakzeptor C | phr | | | | | 2,5 |
| Hexamethoxymethylmelamin | phr | 4,3 | 4,8 | 3,2 | 2,5 | 2 |
| Beschleuniger | phr | 0,75 | 0,75 | 0,75 | 0,75 | 0,75 |
| Schwefel | phr | 4,5 | 4,5 | 4,5 | 4,5 | 4,5 |

| **Eigenschaften** | | | | | | |
|---|---|---|---|---|---|---|
| t₉₀ | min | 10,7 | 12 | 12,2 | 13,0 | 12,5 |
| Härte bei RT | ShoreA | 77 | 80 | 83 | 81 | 79 |
| Rückprallelast. bei 70 °C | % | 51 | 51 | 47 | 47 | 45 |
| Zugfestigkeit bei RT | MPa | 19 | 18 | 20 | 20 | 20,3 |
| Reißdehnung bei RT | % | 382 | 354 | 397 | 406 | 432 |
| Modul 200 % | MPa | 10 | 10,1 | 10,8 | 9,9 | 9,4 |
| Haftung (ungealtert) | N | 239 | 320 | 283 | 285 | 247 |

| | | | | | | |
|---|---|---|---|---|---|---|
| ^{a)} Resorcinharz mit einem Anteil an freiem Resorcin von 8 bis 18 % | | | | | | |

Methylenakzeptor A: Resorcin-Formaldehyd-Styrol-Novolak-Harz mit einem Gehalt an freiem Resorcin von weniger als 0,1 Gew.-%, Erweichungstemperatur 100 - 110 °C
Methylenakzeptor B: Phenol-Formaldehyd-Styrol-Novolak-Harz mit einem Gehalt an freiem Resorcin von weniger als 0,1 Gew.-%, Erweichungstemperatur 105 - 120 °C
Methylenakzeptor C: Vorkondensat aus Resorcin und einem Aceton-Novolak-Harz mit einem Gehalt an freiem Resorcin von weniger als 0,1 Gew.-%, Erweichungstemperatur 80 - 100 °C

Bei den Stahlcordgummierungen der Tabelle 2 ist ebenfalls eine gute Haftung bei den Mischungen mit einem reaktiven Novolak-Harz mit einem Gehalt an freiem Resorcin von weniger als 0,1 Gew.-% oder einem Vorkondensat, enthaltend ein Novolak-Harz, mit einem Gehalt an freiem Resorcin von weniger als 0,1 Gew.-% als Methylenakzeptor zu beobachten. Auch die anderen Mischungseigenschaften verbleiben auf gutem Niveau oder werden, wie beispielsweise die Reißdehnung, verbessert. Die Mengen an HMMM wurden in den Mischungen angepasst, damit die Vulkanisationszeit t₉₀, die sich mit größeren Mengen an Methylenakzeptor erhöhte, auf ähnlichem Niveau verbleibt wie bei Mischung 6(V). Auch bei den Stahlcordgummierungen ergeben sich hinsichtlich der Arbeitssicherheit und der Umweltgefährdung die gleichen Vorteile durch den geringeren Resorcinanteil in die Mischung wie vorab zu Tabelle 1 beschrieben.

**Tabelle 3**

| **Bestandteile** | **Einheit** | **11(V)** | **12(V)** | **13(E)** | **14(E)** | **15(E)** |
|---|---|---|---|---|---|---|
| Polyisopren | phr | 80 | 80 | 80 | 80 | 80 |
| Polybutadien | phr | 20 | 20 | 20 | 20 | 20 |
| Kieselsäure | phr | 60 | 60 | 60 | 60 | 60 |
| Silankupplungsagens^{b)} | phr | 10,3 | 10,3 | 10,3 | 10,3 | 10,3 |
| Weichmacher | phr | 10,65 | 10,65 | 10,65 | 10,65 | 10,65 |
| Alterungsschutzmittel | phr | 4 | 4 | 4 | 4 | 4 |
| organisches Cobaltsalz | phr | 0,36 | 0,36 | 0,36 | 0,36 | 0,36 |
| Zinkoxid | phr | 8 | 8 | 8 | 8 | 8 |
| Resorcin (techn.) | phr | 2,5 | | | | |
| Resorcinharz^{a)} | phr | | 3,25 | | | |
| Methyenakzeptor A | phr | | | 2,5 | | |
| Methyenakzeptor B | phr | | | | 2,5 | |
| Methyenakzeptor D | phr | | | | | 2,0 |
| Hexamethoxymethylmelamin | phr | 3,85 | 3,85 | 3,1 | 3,1 | 2,5 |
| Beschleuniger | phr | 1,5 | 1,5 | 1,8 | 1,8 | 1,8 |
| Schwefel | phr | 4,3 | 4,3 | 4,3 | 4,3 | 4,3 |

| **Eigenschaften** | | | | | | |
|---|---|---|---|---|---|---|
| t₉₀ | min | 10,2 | 11,2 | 10,9 | 10,25 | 12,0 |
| Härte bei RT | ShoreA | 79 | 78 | 78 | 80 | 77 |
| Rückprallelast. bei 70 °C | % | 56 | 58 | 56 | 57 | 55 |
| Zugfestigkeit bei RT | MPa | 21,4 | 21,9 | 21,7 | 20,1 | 21,2 |
| Reißdehnung bei RT | % | 450 | 481 | 462 | 431 | 485 |
| Modul 300 % | MPa | 15,4 | 14,8 | 15,5 | 15,5 | 14,3 |
| Haftung (ungealtert) | N | 899 | 976 | 1050 | 994 | 984 |

| | | | | | | |
|---|---|---|---|---|---|---|
| ^{a)} Resorcinharz mit einem Anteil an freiem Resorcin von 8 bis 18 % ^{b)} Silankupplungsagens auf Ruß im Gewichtsverhältnis 1:1 | | | | | | |

Methylenakzeptor A: Resorcin-Formaldehyd-Styrol-Novolak-Harz mit einem Gehalt an freiem Resorcin von weniger als 0,1 Gew.-%, Erweichungstemperatur 100 - 110 °C
Methylenakzeptor B: Phenol-Formaldehyd-Styrol-Novolak-Harz mit einem Gehalt an freiem Resorcin von weniger als 0,1 Gew.-%, Erweichungstemperatur 105 - 120 °C
Methylenakzeptor D: funktionalisiertes Phenol-Formaldehyd-Novolak-Harz mit einem Gehalt an freiem Resorcin von weniger als 0,1 Gew.-%, Erweichungstemperatur 90 - 115 °C

Bei den Stahlcordgummierungen der Tabelle 3 wird auch eine verbesserte Haftung bei den Mischungen mit einem reaktiven Novolak-Harz mit einem Gehalt an freiem Resorcin von weniger als 0,1 Gew.-% oder einem Vorkondensat, enthaltend ein Novolak-Harz, mit einem Gehalt an freiem Resorcin von weniger als 0,1 Gew.-% als Methylenakzeptor beobachtet. Auch die anderen Mischungseigenschaften verbleiben auf gutem Niveau. Die Mengen an HMMM wurden in den Mischungen angepasst, damit die Vulkanisationszeit t₉₀, die sich mit größeren Mengen an Methylenakzeptor erhöhte, auf ähnlichem Niveau verbleibt wie bei Mischung 11(V). Auch bei den Stahlcordgummierungen der Tabelle 3 ergeben sich hinsichtlich der Arbeitssicherheit und der Umweltgefährdung die gleichen Vorteile durch den geringeren Resorcinanteil in die Mischung wie zu Tabelle 1 beschrieben.

## Patentansprüche

1. Schwefelvernetzbare Kautschukmischung, die ein Methylenakzeptor-Methylendonor-Paar aufweist, **dadurch gekennzeichnet, dass** der Methylenakzeptor ein für eine Reaktion mit einem Methylendonor reaktives Novolak-Harz mit einem Gehalt an freiem Resorcin von weniger als 0,1 Gew.-% oder ein Vorkondensat, enthaltend ein Novolak-Harz, mit einem Gehalt an freiem Resorcin von weniger als 0,1 Gew.-% ist.

2. Schwefelvernetzbare Kautschukmischung nach Anspruch 1, **dadurch gekennzeichnet, dass** der Methylenakzeptor ein Resorcin-Formaldehyd-Styrol-Novolak-Harz ist.

3. Schwefelvernetzbare Kautschukmischung nach Anspruch 1, **dadurch gekennzeichnet, dass** der Methylenakzeptor ein Vorkondensat aus Resorcin und einem Aceton-Novolak-Harz ist.

4. Schwefelvernetzbare Kautschukmischung nach Anspruch 1, **dadurch gekennzeichnet, dass** der Methylenakzeptor ein Phenol-Formaldehyd-Novolak-Harz ist.

5. Schwefelvernetzbare Kautschukmischung nach zumindest einem der vorhergehenden Ansprüche, **dadurch gekennzeichnet, dass** das Gewichtsverhältnis von Methylenakzeptor zu Methylendonor 2,2 : 1 bis 1 : 2,2, beträgt.

6. Schwefelvernetzbare Kautschukmischung nach zumindest einem der vorhergehenden Ansprüche, **dadurch gekennzeichnet, dass** als Methylendonor Hexamethoxymethylmelamin (HMMM) und/oder Hexamethylentetramin (HMT) eingesetzt wird.

7. Fahrzeugluftreifen, der eine mit Schwefel vernetzte Kautschukmischung gemäß Anspruch 1 aufweist.

8. Fahrzeugluftreifen nach Anspruch 7, **dadurch gekennzeichnet, dass** er eine Karkassgummierung und/oder eine Bandagengummierung aus der Kautschukmischung aufweist.

9. Fahrzeugluftreifen nach Anspruch 7 oder 8, **dadurch gekennzeichnet, dass** er eine Gürtelgummierung aus der Kautschukmischung aufweist.

## Claims

1. Sulfur-crosslinkable rubber mixture comprising a methylene acceptor-methylene donor pair, **characterized in that** the methylene acceptor is a novolac resin reactive for a reaction with a methylene donor having a content of free resorcinol of less than 0.1% by weight or a precondensate containing a novolac resin having a content of free resorcinol of less than 0.1%.

2. Sulfur-crosslinkable rubber mixture according to Claim 1, **characterized in that** the methylene acceptor is a resorcinol-formaldehyde-styrene novolac resin.

3. Sulfur-crosslinkable rubber mixture according to Claim 1, **characterized in that** the methylene acceptor is a precondensate of resorcinol and an acetone-novolac resin.

4. Sulfur-crosslinkable rubber mixture according to Claim 1, **characterized in that** the methylene acceptor is a phenol-formaldehyde novolac resin.

5. Sulfur-crosslinkable rubber mixture according to at least one of the preceding claims, **characterized in that** the weight ratio of methylene acceptor to methylene donor is 2.2:1 to 1:2.2.

6. Sulfur-crosslinkable rubber mixture according to at least one of the preceding claims, **characterized in that** the methylene donor employed is hexamethoxymethylmelamine (HMMM) and/or hexamethylenetetramine (HMT).

7. Pneumatic vehicle tyre comprising a sulfurcrosslinked rubber mixture according to Claim 1.

8. Pneumatic vehicle tyre according to Claim 7, **characterized in that** it comprises a carcass rubberization and/or a bandage rubberization composed of the rubber mixture.

9. Pneumatic vehicle tyre according to Claim 7 or 8, **characterized in that** it comprises a belt rubberization composed of the rubber mixture.

## Revendications

1. Mélange de caoutchouc réticulable au soufre, qui présente une paire accepteur de méthylène-donneur de méthylène, **caractérisé en ce que** l'accepteur de méthylène est une résine novolak, réactive pour une réaction avec un donneur de méthylène, dotée d'une teneur en résorcinol libre inférieure à 0,1 % en poids ou un précondensat contenant une résine novolak dotée d'une teneur en résorcinol libre inférieure à 0,1 % en poids.

2. Mélange de caoutchouc réticulable au soufre selon la revendication 1, **caractérisé en ce que** l'accepteur de méthylène est une résine novolak de résorcinol-formaldéhyde-styrène.

3. Mélange de caoutchouc réticulable au soufre selon la revendication 1, **caractérisé en ce que** l'accepteur de méthylène est un précondensat de résorcinol et d'une résine novolak d'acétone.

4. Mélange de caoutchouc réticulable au soufre selon la revendication 1, **caractérisé en ce que** l'accepteur de méthylène est une résine novolak de phénol-formaldéhyde.

5. Mélange de caoutchouc réticulable au soufre selon au moins l'une des revendications précédentes, **caractérisé en ce que** le rapport en poids d'accepteur de méthylène sur un donneur de méthylène est de 2,2 : 1 à 1 : 2,2.

6. Mélange de caoutchouc réticulable au soufre selon au moins l'une des revendications précédentes, **caractérisé en ce que** de l'hexaméthoxyméthylmélamine (HMMM) et/ou de l'hexamethylènetétramine (HMT) est utilisée en tant que donneur de méthylène.

7. Pneumatique de véhicule qui présente un mélange de caoutchouc réticulé au soufre selon la revendication 1.

8. Pneumatique de véhicule selon la revendication 7, **caractérisé en ce qu'**il présente un caoutchoutage de la carcasse et/ou un caoutchoutage de la bande composé du mélange de caoutchouc.

9. Pneumatique de véhicule selon la revendication 7 ou 8, **caractérisé en ce qu'**il présente un caoutchoutage de la ceinture composé du mélange de caoutchouc.
